# EUROPEAN PATENT SPECIFICATION

(11) **EP 2 762 368 B1**
(45) Date of publication and mention of the grant of the patent: **29.03.2017**
(21) Application number: 13000584.6
(22) Date of filing: 05.02.2013
(51) Int. Cl.: B60R 21/36

(54) **Pedestrian safety system for a motor vehicle, airbag for the use in such a pedestrian safety system and motor vehicle with such a pedestrian safety system**
Fußgängersicherheitssystem für ein Motorfahrzeug, Airbag zur Verwendung in einem solchen Fußgängersicherheitssystem und Motorfahrzeug mit einem solchen Fußgängersicherheitssystem
Système de sécurité pour piéton destiné à un véhicule, airbag pour l'utilisation dans un tel système de sécurité pour piéton et véhicule automobile équipé d'un tel système de sécurité pour piéton

(43) Date of publication of application: 06.08.2014
(73) Proprietor: Autoliv Development AB, 447 83 Vårgårda (SE)
(72) Inventor: Reiter, Thomas Dr., 85256 Vierkirchen (DE); Karszt, Norbert, 85716 Lohhof (DE); Reichmann, Christoph, 76275 Ettlingen (DE)
(74) Representative: Schön, Thilo

(56) References cited:
- EP-A1- 1 997 695
- EP-A1- 2 502 794
- WO-A1-2008/117496
- DE-A1-102011 100 034
- US-A1- 2010 300 792

## Description

The invention relates to a pedestrian safety system for a motor vehicle according to the preamble of claim 1, an airbag for the use in such a pedestrian safety system according to claim 11 and to a motor vehicle with such a pedestrian safety system according to claim 12.

If an accident between a motor vehicle, especially a passenger car, and a pedestrian occurs, in which the front of the motor vehicle hits the pedestrian's legs, the pedestrian is often thrown onto the hood towards the windscreen of the vehicle. In this case the head of the pedestrian may hit the hood, the windscreen or an A-pillar of the vehicle. Usually, it is much less dangerous for the pedestrian if his head hits the hood, since the thin sheet metal of the hood can deform plastically and can thus absorb a rather large amount of energy. In order to enhance this capability of the hood, so-called hood lifters have become known in the art. Such a hood lifter lifts the rear part of the hood, such that the distance between the hood and the motor block, or other hard parts, is enlarged, such that a large deformation way is provided. Such a hood lifter is for example described in EP 1 820 703 A1.

In contrast, when the head of the pedestrian hits the windscreen or an A-pillar, no such deformation of vehicle parts takes place in substantial amount, leading to a far higher risk of serious injury of the pedestrian's head. In order to overcome this problem, so-called pedestrian airbag systems have become known in the art. In such a pedestrian airbag system an airbag is provided at the rear end of the hood that deploys basically in front of the windscreen and/or in front of the A-pillars, when a relevant accident occurred or is very likely to occur. Such a pedestrian airbag system is for example described in DE 10 2005 050 107 A1.

In order to get best protection for the pedestrian, especially the pedestrian's head, it is of course best to cover the whole windscreen and both A-pillars by the airbag. This in turn leads to a "blinding" of the driver, since he cannot see through the airbag and this blinding of the driver bears the risk of an additional accident.

To overcome this problem, the EP 11 000 604 A1 describes a pedestrian airbag system with a retractor, which pulls down the airbag from the windscreen after the airbag has reached its full deployment state in order to remove the airbag from the driver's line of sight as quickly as possible.

Although the use of such a pull-down device is a large improvement, the blocking of the driver's sight (even if only for a short time) brings a risk of an additional accident, especially since the driver might panic if his sight is taken by the deploying airbag.

In order to limit the height of the airbag, the upper and the lower wall of the airbag skin of the airbag can be connected by tethers. The generic EP 1 997 695 A1, disclosing a pedestrian safety system according to the preamble of claim 1, shows embodiments of pedestrian airbags with the tethers extending in cross direction of the vehicle and embodiments with tethers extending in longitudinal direction of the vehicle.

The WO 2008/117496 A1 shows pedestrian airbags with tethers extending in cross direction of the vehicle.

Starting from this prior art, the invention sets itself the problem to provide a compromise between a vehicle with no pedestrian airbag at all and a vehicle with a pedestrian airbag, taking the driver's sight. The compromise should be such, that the pedestrian's head is protected at least in most expected cases at a tolerable amount, but that the driver's sight is never completely taken by the airbag.

This problem is solved by a pedestrian safety system with the features of claim 1.

As it has been stated above, the hood is a fairly good "cushion" for protecting the pedestrian's head. So, the basic idea of the invention is to "extend" the hood towards the windscreen. For this purpose an airbag is provided, which has a section that extends in deployed state between the rear end of the hood and a lower part of the windscreen. The airbag is dimensioned such that it does not obstruct the driver's sight completely. Preferably, the airbag does not obstruct the driver's sight at all. This can only be achieved if the airbag has (at least in an area in front of the driver) a relatively small volume. To achieve a good protection of the pedestrian's head in spite of this small volume, a plurality of shaping tether elements are present that connect the upper wall and the lower wall of the outer skin of the airbag in such a way, that the airbag has at least in sections a wedge-shaped cross section, in such a way that the height of the airbag rises from its rear end in the direction towards its front end.

As a result, an enlarged "cushion" is created, consisting of the hood and a section of the upper wall of the airbag (since the airbag module, consisting of at least the airbag and an inflator, is preferably stored under the hood, a section of the outer skin of the airbag will still be under the hood, even if the airbag is in its deployed state).

Because the line of sight of the driver should not be obstructed the space available for the airbag is limited. To give the pedestrian's head a good protection despite this limited space available it is necessary to use this space to a high degree. For this reason the shaping tether elements are present giving the outer skin a very defined shape.

Preferred embodiments of the invention are defined in the subclaims and result from example embodiments described with reference to the figures.

An airbag for the use in a pedestrian safety system according to the invention is defined in claim 11 and a motor vehicle using such a pedestrian safety system is defined in claim 12.

The invention will now be described by means of preferred embodiments in view of the accompanying figures. The figures show:
- Figure 1: a first embodiment of an airbag for the use in a pedestrian safety system,
- Figure 1a: a sectional view along line A-A in figure 1,
- Figure 1b: a sectional view along line B-B in figure 1,
- Figure 2: the airbag of Figure 1 in a mounted and deployed state, such that it is a part of a pedestrian safety system,
- Figure 3: a sectional view taken along line C-C of figure 2,
- Figure 4: a variation of the airbag in a representation according to claim 1,
- Figure 5: another variation of the airbag in a representation according to claim 1,
- Figure 6: a second embodiment of the airbag in a representation basically according to Figure 2,
- Figure 6a: a sectional view taken along line D-D in Figure 6,
- Figure 6b: a sectional view taken along line E-E in Figure 6,
- Figure 6c: a sectional view taken along lines F-F and G-G in Figure 6,
- Figure 7a: a variation of what is shown in Figure 6a,
- Figure 7b: the airbag of Figure 7a in a sectional view according to Figure 6b,
- Figure 8: a more detailed representation of an airbag in a view according to Figures 3, Figure 6a and 7a in a representation according to Figure 3,
- Figure 9: a variation to what is shown in Figure 8 and
- Figure 10: a variation to what is shown in Figure 9.

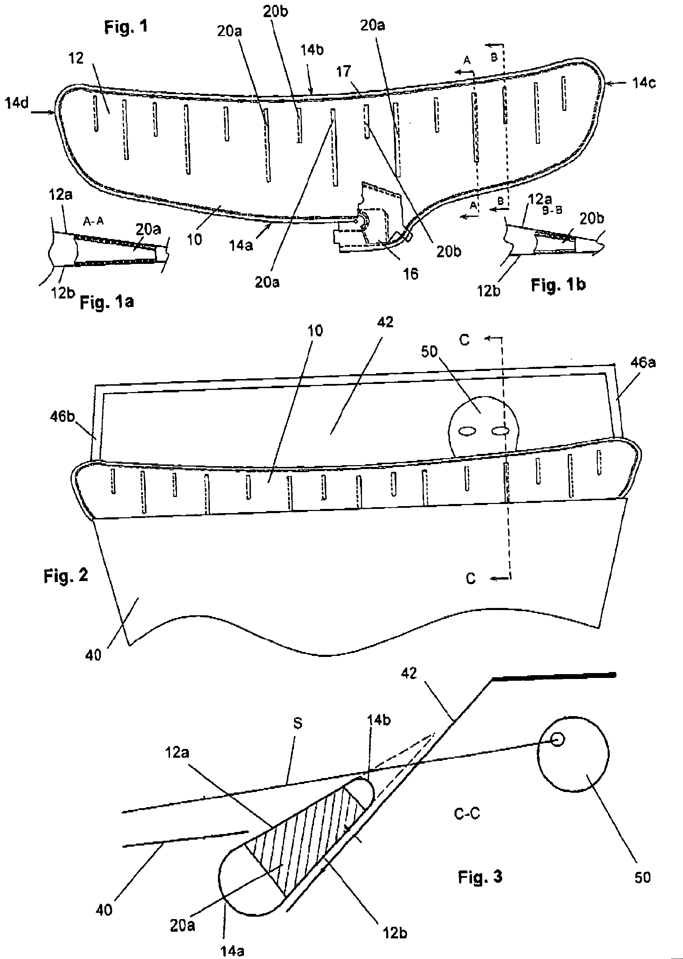

Figures 1 to 3 show a first embodiment of the invention, wherein Figure 1 shows only the airbag, whereas figures 2 and 3 show the mounted and deployed airbag and thus the complete pedestrian safety system. Figures 2 and 3 are highly schematic.

In the following, reference is made to all three figures. The airbag 10 has (like all airbags) an outer skin 12, being comprised of an upper wall 12a and a lower wall 12b. In the embodiment shown, the airbag 10 is a "2D" airbag, that means that the upper wall 12a and the lower wall 12b are directly connected to one another by means of an edge connection, namely an edge seam 17. The outer skin 12 extends from a front end 14a to a rear end 14b and from a left end 14c to a right end 14d (the terms "front", "rear", "left" and "right" refer to the mounted and deployed state). An accommodation area 16 for a not shown gas generator is provided at the front end 14a of the outer skin 12. The outer skin 12 has basically the shape of a rectangle whose "length" (the distance between the front end 14a and the rear end 14b) is substantially smaller than its "width" (the distance between the left end 14c and the right end 14d). Preferably, the distance between the left end the right end is at least three times, and even more preferably, four times larger than the distance between the front end and the rear end.

Between the upper wall 12a and the lower wall 12b a plurality of shaping tether elements 20a end 20b is provided. Since it is essential that the airbag has a defined cross section at least in front of the driver and preferably along its entire width, it is preferred that at least ten such shaping tether elements 20a and 20b are provided. Each shaping tether element 20a, 20b extends from a first end to a second end, wherein the first end is closer to the rear end 14b than the second end. Herein, it is further preferred that the distance between the first end and the rear end 14b of the outer skin is basically the same for all shaping tether elements. As one can see in figure 1, two types of shaping tether elements are present, namely long shaping tether elements 20a and short shaping tether elements 20b. Long and short shaping tether elements are alternating. This gives a good compromise between a very good shaping of the outer skin of the airbag and a quick and complete filling of the same. The long shaping elements 20a extend from their first end to their second ends which are even in the deployed state of the airbag located under the hood 40.

As one can see from Figures 1a and 1b, all shaping tether elements 20a and 20b have a "wedge shape" or, to be more precisely, a shape of a wedge with a cut-off vertex. In the definitions chosen in this application the term "wedge" also refers to a wedge with cut-off vertex. This wedge-shaped shaping tethers force the outer skin 12 to a shape with a wedge-shaped cross section as can best be seen in Figure 3. In the fist embodiment the complete airbag is wedge-shaped along its entire length.

Figures 2 and 3 show the airbag of Figure 1 in its mounted an deployed state, wherein figure 3 is highly schematic.

As one can see from Figure 2, the outer skin of the airbag 10 extends from the left A-pillar 46a to the right A-pillar 46b, but only covers a part of the windscreen, namely a lower part of the windscreen and fills a gap between the hood 40 and the windscreen 42. Due to the relatively small length and the wedge-shaped cross section, the line of sight S of the driver (shown is only the driver's head 50) remains unobstructed when the airbag 10 is in its fully deployed state. As one can see particularly in Figure 3, the airbag (which is mounted under the hood, e. g. at the underside of the hood) extends from its front end 14a, which remains under the hood, to its rear end 14b, which is positioned under the height of the eyes of an average sized driver, sitting in his standard seating position. Due to the strict shaping of the outer skin, all parts of the outer skin of the airbag 10 remain under the line of sight S.

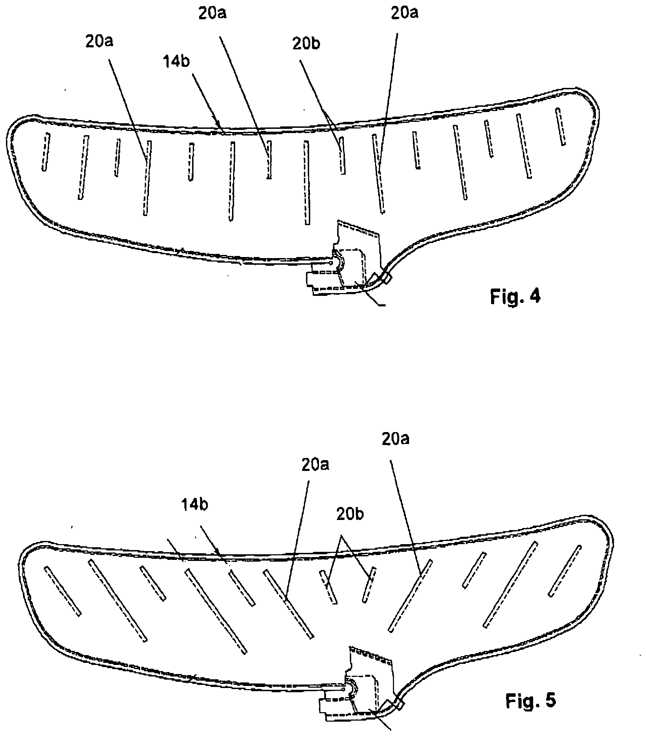

In the first embodiment, all long shaping tether elements 20a are basically congruent and all short shaping tether elements 20b are basically congruent. This leads to a constant cross section of the airbag along its entire width. In the variant of Figure 1 all shaping tether elements 20a, 20b extend in one direction, namely such, that in deployed state they all lie in parallel planes that extend vertically and in driving direction of the vehicle. The figures 4 and 5 show alternative orientations of the shaping tether elements 20a, 20b: in the variant of Figure 4 they are oriented vertically to the rear end 14b and in the variant shown in Figure 5 the shaping tether elements 20a, 20b are "star-shaped" oriented.

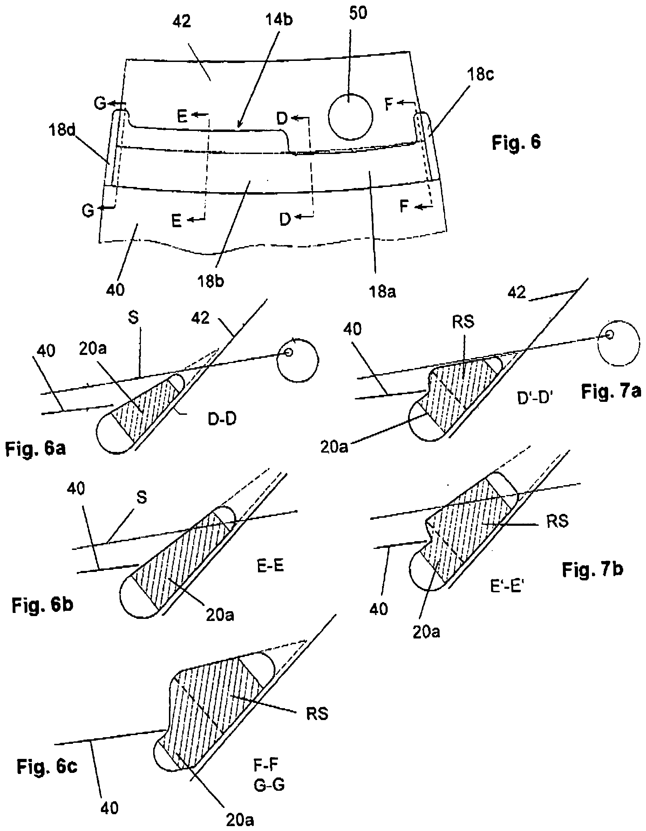

Figure 6 and Figures 6a to 6c show another embodiment of the invention. The main difference between this embodiment and the first embodiment is, that the outer skin 12 of the airbag does not have a basically uniform length, but that it is shortest in front of the driver and longer in front of the passenger and the A-pillars. This uses the fact that of course only the driver's sight should be unobstructed, especially to the front. So, additional protection surface for the pedestrian can be gained without reducing the driver's sight. To have a larger protection surface on the passenger's side is additionally of advantage, since most pedestrian accidents happen on the passenger side of the vehicle.

The second difference to the first embodiment is that not only the length of the airbag skin is not constant along its width but that also the shape of the shaping tether elements is not constant: In front of the driver and in front of the passenger, the shaping tether elements are completely wedge-shaped as in the first embodiment. But in front of the A-pillars, the shaping tether elements are wedge-shaped only in a rear section RS. This leads to a higher thickness of the airbag in front of the A-pillars, as can be seen from Figure 6c.

The Figures 7a and 7b show a variant in which at least all long shaping tether elements 20a are wedge-shaped only in a rear section RS. This is especially of advantage, if the rear edge of the hood 40 is only lifted to a height that is substantially under the driver's line of sight 4. In this connection it needs to be mentioned that the airbag may contain additional tether elements which are not wedge-shaped at all; these tether elements can especially be placed in front of the A-pillars or in some embodiments even in front of the passenger seat. Further it needs to be mentioned that shaping tether elements, especially long shaping tether elements 20a that are wedge-shaped only in their rear section can also be used in embodiments whose airbag skin has a basically constant length as in the first embodiment.

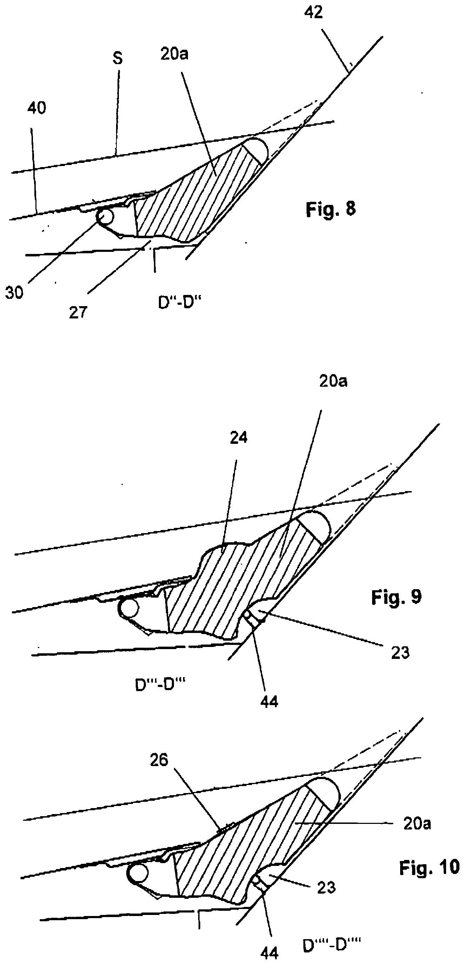

The Figures 8 to 10 show sectional views, corresponding to the cuts along line C-C in Figure 2 or D-D in Figure 6 with more details and some features that might be incorporated in both embodiments.

First, Figure 8 shows that the airbag is mounted to the underside of the hood 40 by means of the gas generator 30, which is accommodated inside the outer skin 12 of the airbag 10. Preferably, at least one hood lifter, which is independent from the airbag 10, is present, so that first the rear edge of the hood 40 is lifted and then the gas generator 30 is triggered in order to bring the airbag 10 into its deployed state.

As it has already been stated, the hood 40 is a rather good "cushion" that can largely deform if the head of a pedestrian hits the same. It is of course desired that this property is maintained. Therefore, the geometry of the airbag 12 is chosen such, that it does not transfer substantial forces between rigid parts like the motor block, the covering of the same, or the windshield panel, to the hood 40. Therefore it is preferred that the lower wall 12b of the outer skin 12 is not in contact with a part of the vehicle in region under the hood 40. In order to achieve this, a clearance 27 can be provided at least at the bottom of each long shaping elements 20a as shown in Figure 8.

One characteristic of the airbag according to the invention is, that it has, at least in the area in front of the driver, a relatively small hight. In order to improve the protection in the area of an obstacle, especially a windscreen wiper 44, an accommodation 23 for the same can be provided in the bottom of at least the long shaping tethers 20a. To compensate for this accommodation 23, an outward bulging 24 can be provided opposite this accommodation 23 or, alternatively, as shown in Figure 10, a load distribution element 26, for example in form of a strip of semiflexible plastic material, which is sewn, welded or glued to the upper wall 12a, can be provided opposite this accommodation 23.

In order to retain the wedge-shaped cross section to the very left and right ends of the outer skin 12, respectively shaped end elements sewn to the upper wall and the lower wall, can be provided (not shown in the figures). This complicates the manufacturing of the airbag a little bit, but can lead to an even better protection in the area of the A-pillars. This is not shown in the figures.

Further, it is to be noted that the shaping tether elements can be separate elements which are connected, especially sewn, to the upper end of the lower wall, but that they also can be integrated tethers when using one-piece-weaving (OPW) technology.

The pedestrian safety system is especially useful for the use at motor vehicles with a relatively long hood.

The decision whether the pedestrian safety system according to the invention or one with a larger airbag leads to the best overall results (taking into account the pedestrian's safety and the risk of another accident following from the "blinding" of the driver) can only be made if the geometry of the vehicle is taken into account.

### List of reference numerals

- 10: airbag
- 12: outer skin
- 12a: upper wall
- 12b: lower wall
- 14a: front end
- 14b: rear end
- 14c: left end
- 14d: right end
- 16: accommodation area for gas generator
- 17: edge seam
- 18a: driver side section
- 18b: passenger side section
- 18,c,d: A-pillar section
- 20a: long shaping tether element
- 20b: short shaping tether element
- 22: lower edge
- 23: accommodation
- 24: outward bulging
- 26: load distribution element
- 27: clearance
- 30: gas generator
- 40: hood
- 42: windscreen
- 44: windscreen wiper
- 46a,b: A-pillar
- 50: driver's head
- S: line of sight

## Claims

1. Pedestrian safety system for a motor vehicle having a hood (40) and a windscreen (42), said safety system comprising an airbag (10) with an outer skin (12) extending from a front end (14a) to a rear end (14b) when the airbag (10) is in its fully deployed state with the rear end (14b) being positioned in front of the windscreen (42) at least in sections, said airbag skin (12) comprising an upper wall (12a) and a lower wall (12b),
wherein the airbag (10) further comprises a plurality of shaping tether elements (20a, 20b) connecting the upper wall (12a) and the lower wall (12b), said shaping tether elements (20a, 20b) each extending from a first end to a second end with the first ends being closer to the rear end (14b) of the outer skin (12) than the second ends,
**characterized in that** the height of each shaping tether element (20a, 20b) rises at least in a rear section of the airbag from its first end towards its second end.

2. Pedestrian safety system according to claim 1,
**characterised in that** the height of shaping tether elements (20a, 20b) rises from their first to their second ends such that the airbag has a wedge-shaped cross-section.

3. Pedestrian safety system according to claim 1, **characterised in that** the height of the shaping tether elements (20a, 20b) rises from their first ends to a mid portion and then decreases towards their second ends such that the upper wall of the airbag skin shows a step or that the upper wall (12a) has a raised middle-portion.

4. Pedestrian safety system according to one of the preceding claims, **characterised in that** at least some of the shaping tether elements (20a, 20b) comprise a recess at their bottom connected to the lower wall (12b), such that the lower wall (12b) comprises an accommodation for a windscreen wiper (44).

5. Pedestrian safety system according to claim 4, **characterised in that** opposed to the recess the shaping tether elements (20a, 20b) show an outward bulging and/or that an load distribution element (26) it provided opposed to the recesses.

6. Pedestrian safety system according to one of the preceding claims, **characterised in that** the outer skin (12) extends across the whole width of the windscreen (42) and covers at least a part of the left A-pillar (46a) and a part of the right A-pillar (46b).

7. Pedestrian safety system according to claim 6, **characterised in that** the thickness of the airbag (10) rises at its lateral end portions, namely at the lateral end portions being positioned in front of the A-pillars (46a, 46b).

8. Pedestrian safety system according to claim 6 or claim 7, **characterised in that** the distance from the front end to the rear end (14a, 14b) is not constant over the width of the outer skin (12) such that in front of the driver's seat of the motor vehicle, the rear end (14b) of the airbag skin (12) is closer to the hood (40) than at other portions.

9. Pedestrian safety system according to one of the preceding claims, **characterised in that** shaping tether elements (20a, 20b) of different lengths are provided across the width of the airbag (10), preferably such that the first end of the shaping tether elements (20a, 20b) all have basically the same distance to the rear end (14b) of the outer skin (12) and that longer (20a) and shorter (20b) tethers are provided alternatingly.

10. Pedestrian safety system according to one of the preceding claims, **characterised in that** the upper (12a) and the lower wall (12b) of the outer skin (12) are directly connected to one another by means of an edge connection, preferably by an edge seam (17).

11. Airbag (10) for the use in a pedestrian airbag system according to one of the claims 1 to 10.

12. Motor vehicle with a pedestrian airbag system according to one of the claims 1 to 10.

13. Motor vehicle according to claim 12, **characterised in that** the front end (14a) of the airbag skin (12) is located under the hood (40) of the motor vehicle and wherein at least a part of the shaping tether elements (20a, 20b) extend under the hood (40).

14. Motor vehicle according to claim 13, **characterised in that** the fully deployed airbag (10) does not transmit a force to the underside of the hood (40).

15. Motor vehicle according to one of the claims 12 to 14, **characterised in that** the line of sight (S) of the driver remains unobstructed by the fully deployed airbag (10).

## Patentansprüche

1. Fußgängersicherheitssystem für ein Kraftfahrzeug mit einer Motorhaube (40) und einer Windschutzscheibe (42), wobei das Sicherheitssystem einen Airbag (10) mit einer Außenhülle (12) umfasst, die von einem vorderen Ende (14a) zu einem hinteren Ende (14b) verläuft, wenn sich der Airbag (10) in seinem vollständig entfalteten Zustand befindet, in der das hintere Ende (14b) zumindest abschnittsweise vor der Windschutzscheibe (42) platziert ist, wobei die Airbaghülle (12) eine obere Wand (12a) und eine untere Wand (12b) umfasst,
wobei der Airbag (10) ferner eine Vielzahl von formenden Haltebandelementen (20a, 20b) umfasst, die die obere Wand (12a) und die untere Wand (12b) verbinden, die formenden Haltebandelemente (20a, 20b) jeweils von einem ersten Ende zu einem zweiten Ende verlaufen, wobei die ersten Enden näher am hinteren Ende (14b) der Außenhülle (12) liegen als die zweiten Enden,
**dadurch gekennzeichnet, dass** die Höhe jedes formenden Haltebandelements (20a, 20b) zumindest in einem hinteren Abschnitt des Airbags von seinem ersten Ende in Richtung seines zweiten Endes ansteigt.

2. Fußgängersicherheitssystem nach Anspruch 1,
**dadurch gekennzeichnet, dass** die Höhe der formenden Haltebandelemente (20a, 20b) von ihrem ersten zu ihrem zweiten Ende derart ansteigt, dass der Airbag einen keilförmigen Querschnitt aufweist.

3. Fußgängersicherheitssystem nach Anspruch 1, **dadurch gekennzeichnet, dass** die Höhe der formenden Haltebandelemente (20a, 20b) von ihrem ersten Ende zu einem mittleren Abschnitt ansteigt und dann in Richtung ihres zweiten Endes abfällt, sodass die obere Wand der Airbaghülle eine Stufe aufweist oder dass die obere Wand (12a) einen erhabenen Mittelabschnitt aufweist.

4. Fußgängersicherheitssystem nach einem der vorhergehenden Ansprüche, **dadurch gekennzeichnet, dass** zumindest einige der formenden Haltebandelemente (20a, 20b) eine Vertiefung an ihrem Boden umfassen, die mit der unteren Wand (12b) verbunden ist, sodass die untere Wand (12b) eine Aufnahme für einen Scheibenwischer (44) umfasst.

5. Fußgängersicherheitssystem nach Anspruch 4, **dadurch gekennzeichnet, dass** gegenüber der Vertiefung die formenden Haltebandelemente (20a, 20b) eine Wölbung nach außen aufweisen und/oder dass gegenüber den Vertiefungen ein Lastverteilungselement (26) vorgesehen ist.

6. Fußgängersicherheitssystem nach einem der vorhergehenden Ansprüche, **dadurch gekennzeichnet, dass** die Außenhülle (12) quer über die gesamte Breite der Windschutzscheibe (42) verläuft und zumindest einen Teil der linken A-Säule (46a) und einen Teil der rechten A-Säule (46b) bedeckt.

7. Fußgängersicherheitssystem nach Anspruch 6, **dadurch gekennzeichnet, dass** die Dicke des Airbags (10) an seinen lateralen Endabschnitten, und zwar an den lateralen Endabschnitten, die vor den A-Säulen (46a, 46b) platziert sind, ansteigt.

8. Fußgängersicherheitssystem nach Anspruch 6 oder Anspruch 7, **dadurch gekennzeichnet, dass** der Abstand vom vorderen Ende zum hinteren Ende (14a, 14b) über die Breite der Außenhülle (12) nicht gleichbleibend ist, sodass das hintere Ende (14b) der Airbaghülle (12) vor dem Fahrersitz des Kraftfahrzeugs näher an der Motorhaube (40) ist als an anderen Abschnitten.

9. Fußgängersicherheitssystem nach einem der vorhergehenden Ansprüche, **dadurch gekennzeichnet, dass** unterschiedlich lange formende Haltebandelemente (20a, 20b) quer über die Breite des Airbags (10) vorgesehen sind, vorzugsweise derart, dass die ersten Enden der formenden Haltebandelemente (20a, 20b) alle im Grunde denselben Abstand zum hinteren Ende (14b) der Außenhülle (12) aufweisen und dass längere (20a) und kürzere (20b) Haltebänder abwechselnd vorgesehen sind.

10. Fußgängersicherheitssystem nach einem der vorhergehenden Ansprüche, **dadurch gekennzeichnet, dass** die obere (12a) und die untere Wand (12b) der Außenhülle (12) über eine Randverbindung, vorzugsweise eine Randnaht (17), direkt miteinander verbunden sind.

11. Airbag (10) zur Verwendung in einem Fußgängerairbagsystem nach einem der Ansprüche 1 bis 10.

12. Kraftfahrzeug mit einem Fußgängerairbagsystem nach einem der Ansprüche 1 bis 10.

13. Kraftfahrzeug nach Anspruch 12, **dadurch gekennzeichnet, dass** sich das vordere Ende (14a) der Airbaghülle (12) unter der Motorhaube (40) des Kraftfahrzeugs befindet und wobei zumindest ein Teil der formenden Haltebandelemente (20a, 20b) unter der Motorhaube (40) verläuft.

14. Kraftfahrzeug nach Anspruch 13, **dadurch gekennzeichnet, dass** der vollständig entfaltete Airbag (10) keine Kraft auf die Unterseite der Motorhaube (40) überträgt.

15. Kraftfahrzeug nach einem der Ansprüche 12 bis 14, **dadurch gekennzeichnet, dass** die Sichtlinie (S) des Fahrers durch den vollständig entfalteten Airbag (10) frei bleibt.

## Revendications

1. Système de sécurité pour piéton destiné à un véhicule automobile comportant un capot (40) et un pare-brise (42), ledit système de sécurité comprenant un airbag (10) doté d'un revêtement externe (12) s'étendant d'une extrémité avant (14a) à une extrémité arrière (14b) quand l'airbag (10) est dans son état entièrement déployé avec l'extrémité arrière (14b) positionnée devant le pare-brise (42) au moins sur certaines parties, ledit revêtement d'airbag (12) comprenant une paroi supérieure (12a) et une paroi inférieure (12b),
l'airbag (10) comprenant en outre une pluralité d'éléments d'attache et de mise en forme (20a, 20b) reliant la paroi supérieure (12a) et la paroi inférieure (12b), lesdits éléments d'attache et de mise en forme (20a, 20b) s'étendant chacun d'une première extrémité à une seconde extrémité, les premières extrémités étant plus proches de l'extrémité arrière (14b) du revêtement externe (12) que les secondes extrémités,
**caractérisé en ce que** la hauteur de chaque élément d'attache et de mise en forme (20a, 20b) augmente au moins dans une partie arrière de l'airbag de sa première extrémité vers sa seconde extrémité.

2. Système de sécurité pour piéton selon la revendication 1, **caractérisé en ce que** la hauteur d'éléments d'attache et de mise en forme (20a, 20b) augmente de leur première à leur seconde extrémité de telle sorte que l'airbag possède une section transversale en forme de coin.

3. Système de sécurité pour piéton selon la revendication 1, **caractérisé en ce que** la hauteur des éléments d'attache et de mise en forme (20a, 20b) augmente de leur première extrémité à une portion centrale et diminue ensuite vers leur seconde extrémité de telle sorte que la paroi supérieure du revêtement d'airbag présente un palier ou que la paroi supérieure (12a) présente une portion médiane surélevée.

4. Système de sécurité pour piéton selon l'une des revendications précédentes, **caractérisé en ce qu**'au moins certains des éléments d'attache et de mise en forme (20a, 20b) comprennent une cavité en bas de ceux-ci reliée à la paroi inférieure (12b), de telle sorte que la paroi inférieure (12b) comprend un logement pour un essuie-glace (44).

5. Système de sécurité pour piéton selon la revendication 4, **caractérisé en ce que,** à l'opposé de la cavité, les éléments d'attache et de mise en forme (20a, 20b) présentent un renflement vers l'extérieur et/ou **en ce qu'**un élément de répartition de charge (26) est prévu à l'opposé des cavités.

6. Système de sécurité pour piéton selon l'une des revendications précédentes, **caractérisé en ce que** le revêtement externe (12) s'étend à travers toute la largeur du pare-brise (42) et recouvre au moins une partie du montant A gauche (46a) et une partie du montant A droit (46b).

7. Système de sécurité pour piéton selon la revendication 6, **caractérisé en ce que** l'épaisseur de l'airbag (10) augmente au niveau de ses portions d'extrémité latérales, c'est-à-dire au niveau des portions d'extrémité latérales positionnées devant les montants A (46a, 46b).

8. Système de sécurité pour piéton selon la revendication 6 ou la revendication 7, **caractérisé en ce que** la distance de l'extrémité avant à l'extrémité arrière (14a, 14b) n'est pas constante sur la largeur du revêtement externe (12) de telle sorte que, devant le siège du conducteur du véhicule automobile, l'extrémité arrière (14b) du revêtement d'airbag (12) est plus proche du capot (40) que sur d'autres portions.

9. Système de sécurité pour piéton selon l'une des revendications précédentes, **caractérisé en ce que** des éléments d'attache et de mise en forme (20a, 20b) de longueurs différentes sont prévus à travers la largeur de l'airbag (10), de préférence de telle sorte que les premières extrémités des éléments d'attache et de mise en forme (20a, 20b) présentent toutes fondamentalement la même distance par rapport à l'extrémité arrière (14b) du revêtement externe (12) et que des bande d'attache plus longues (20a) et plus courtes (20b) sont prévues alternativement.

10. Système de sécurité pour piéton selon l'une des revendications précédentes, **caractérisé en ce que** la paroi supérieure (12a) et la paroi inférieure (12b) du revêtement externe (12) sont reliées directement l'une à l'autre au moyen d'une liaison en bordure, de préférence par une couture en bordure (17).

11. Airbag (10) pour l'utilisation dans un système d'airbag pour piéton selon l'une des revendications 1 à 10.

12. Véhicule automobile équipé d'un système d'airbag pour piéton selon l'une des revendications 1 à 10.

13. Véhicule automobile selon la revendication 12, **caractérisé en ce que** l'extrémité avant (14a) du revêtement d'airbag (12) est située sous le capot (40) du véhicule automobile et dans lequel au moins une partie des éléments d'attache et de mise en forme (20a, 20b) s'étend sous le capot (40).

14. Véhicule automobile selon la revendication 13, **caractérisé en ce que** l'airbag (10) entièrement déployé ne transmet pas de force au côté inférieur du capot (40).

15. Véhicule automobile selon l'une des revendications 12 à 14, **caractérisé en ce que** la ligne de vision (S) du conducteur reste dégagée par l'airbag (10) entièrement déployé.
